# EUROPEAN PATENT APPLICATION

(11) **EP 4 140 706 A1**
(43) Date of publication of application: **01.03.2023**
(21) Application number: 21192606.8
(22) Date of filing: 23.08.2021
(51) Int. Cl.: B29C 65/34, B29K 101/12, B29K 105/06, B29K 307/04, B29K 309/08, B29L 31/30

(54) **HEATING ELEMENT AND WELDING KIT FOR RESISTANCE WELDING AND METHODS OF MANUFACTURING A HEATING ELEMENT AND WELDING THERMOPLASTIC COMPONENTS**

(71) Applicant: Airbus Operations GmbH, 21129 Hamburg (DE)
(72) Inventor: Vichniakov, Alexei, 21129 Hamburg (DE); Finger, Lennart, 21129 Hamburg (DE); Sutii, Victor, 21129 Hamburg (DE)
(74) Representative: Schornack, Oliver

(57) **Abstract**

Described is a heating element (100) for resistance welding of thermoplastic components (21, 22). The heating element (100) comprises an electrically conductive sheet (105) comprising a plurality of cut-outs (111-113), wherein a ratio of cut-outs (111-113) to electrically conductive sheet (105) changes at least along a transverse direction of the sheet (105), so that an electrical resistance of the sheet (105) has a maximum at a centre of the sheet (105). Further described is a welding kit comprising such heating element (100) and an electrical insulation layer (121, 122), a method of manufacturing such heating element, and a method of employing such heating element for welding two thermoplastic components to one another.

## Description

The invention relates to a heating element and a welding kit for resistance welding and methods of manufacturing a heating element and welding thermoplastic components using such heating element. The invention particularly relates to a heating element of an electrically conductive sheet having a plurality of cut-outs, a method of manufacturing such heating element, and a method of welding thermoplastic components with such a heating element.

The welding of thermoplastic components, particularly thermoplastic composite components, is usually done by heating the components, applying a static pressure and consolidating both components to be welded. The heating is achieved with different techniques, such as induction heating, resistance welding, ultrasonic welding, infrared welding or laser welding.

For resistance welding a mesh produced from wires of stainless steel or copper is usually employed in between two join partners (two thermoplastic components to be welded to one another). The application of an electric voltage to the mesh heats its wires due to the electrical resistance of the wires, thereby melting at least the surfaces of the join partners. A certain amount of pressure is applied to the join zone or welding zone to achieve a weld between the two thermoplastic components.

However, it has been found that such a mesh of wires promotes entrapment of air between the join partners, so that the quality of the weld decreases. This particularly happens at crossings/intersections of two wires of the mesh running in perpendicular directions.

It is therefore an object of the invention to provide a heating element, a method of manufacturing the same and a method of welding thermoplastic components to one another, which achieve a higher quality weld.

This object is solved by a heating element with the features of claim 1, a welding kit with the features of claim 6, a method of manufacturing a heating element with the features of claim 7, and a method of welding thermoplastic components with the features of claim 10.

Preferred embodiments are defined by the dependent claims.

According to a first exemplary aspect to better understand the present disclosure, a heating element for resistance welding of thermoplastic components comprises an electrically conductive sheet comprising a plurality of cut-outs. The use of a sheet avoids crossing wires, which are likely to entrap air when used to weld the thermoplastic components. Thus, the heating element does not only avoid the drawback of conventional wire meshes, but is also thinner over its entire area for welding than conventional heating elements, particularly as crossing wires of conventional meshes require twice the height of one wire. This further improves a shear strength of the join partners, as the reduced thickness of the joint between both join partners induces less bending moments when subjected to a load.

In this disclosure, the heating element is to be connected to an electric circuit, so that the electrically conductive sheet heats due to the current flowing therethrough. A longitudinal direction of the sheet is to be understood as a direction from the positive to the negative potential of the electric circuit. A transverse direction of the sheet means a direction substantially perpendicular to the longitudinal direction of the sheet.

Furthermore, the heating element has a varying ratio of cut-outs to electrically conductive sheet. Particularly, the ratio of cut-outs to electrically conductive sheet changes at least along a transverse direction of the sheet, so that an electrical resistance of the sheet has a maximum at a centre of the sheet. The maximum electrical resistance in the centre region of the sheet means that a current intensity flowing in this centre region is lower compared to other regions of the sheet having a lower electrical resistance. The reduced current intensity generates less heat per unit area of the sheet (e.g., heat power per mm² or cm²). On the other hand, in the edge regions of the sheet, when viewed in the transverse direction, the lower electrical resistance leads to an increased current intensity, which provides for generating a higher heat per unit area of the sheet.

This particular distribution of the electrical resistance of the sheet in the transverse direction minimises or avoids a negative effect usually occurring with conventional wire mesh heating elements. Specifically, the edge regions of the sheet in transverse direction are at a boundary with air, since they are at a lateral end of the welding zone. The air cools the edge regions of the sheet and thermoplastic components. Thus, when using conventional wire mesh heating elements, the edge regions in transverse direction will be cooler than the centre region. This is referred to as the "transversal edge effect", leading to a decreased welding quality.

The heating element of the present disclosure avoids the transversal edge effect by generating a higher heat per unit area of the sheet due to the specific ratio of cut-outs to electrically conductive sheet. In addition, it also allows decreasing a mean welding temperature in the entire welding zone or join zone, since there is no need to compensate for the lower temperatures of the transversal edge area. This actually further avoids overheating of the centre area as in some conventional wire mesh solutions.

The ratio of cut-outs to electrically conductive sheet can be calculated in two ways. Firstly, the ratio could be contemplated along a line in transverse direction. This line forms a cross-section through the thin sheet, wherein the cross section will include sheet portions and empty portions due to the cut-outs. The ratio of cut-outs to electrically conductive sheet is then the quotient of the accumulated length of all empty (or cut-out) portions to the accumulated length of the sheet portions over a unit length. The unit length may be the entire length of the cross section (actually the entire width of the sheet as the cross-section is taken along the transverse direction) or only a portion thereof, such as 1 cm, 5 cm or 10 cm. Secondly, the ratio could be contemplated over a unit area, one dimension of which lies in the transverse direction. Here, the ratio of cut-outs to electrically conductive sheet is the quotient of the accumulated area of all cut-outs in the unit area to the accumulated area of the sheet in the unit area. The unit area may be the entire width of the sheet multiplied by a unit length in longitudinal direction of the sheet, such as 1 cm, 5 cm or 10 cm. Alternatively, the unit area may be independent of the width of the sheet, such as 1 cm², 5 cm² or 10 cm². The ratio, particularly an open area ratio (cut-out area over "solid" sheet area), can for example be 0.2 to 0.8, preferably 0.4 to 0.6.

In any case, due to a change of the ratio of cut-outs to electrically conductive sheet along the width of the sheet (along the transverse direction), the sheet can be tailored by selectively removing sheet material (cutting out sheet material). For instance, in order to reduce current intensity in the transversal edge region of the sheet, the ratio of cut-outs to electrically conductive sheet decreases, i.e. the accumulated length or accumulated area of the cut-outs decreases or the accumulated length or accumulated area of sheet portion/material increases in the transversal edge region compared to the centre region of the sheet. The sheet, hence, has a tailored cross-section comparable to a gap and wire configuration, but with a continuous height (thickness of the sheet) throughout the entire cross-section. Thus, the heating element of the present disclosure provides for a tailored electrical resistance along its transverse cross-section (along its transverse direction). The heating element may comprise distinct regions of different electrical resistance along the transverse direction or may comprise a gradual change of electrical resistance when viewed in the transverse direction.

Alternatively or additionally, a ratio of cut-outs to electrically conductive sheet can change along a longitudinal direction of the sheet. The details of the ratio of cut-outs to electrically conductive sheet described with respect to a transverse direction may also be applied to the longitudinal direction. Thus, a repetition of these details is omitted. The heating element of the present disclosure, hence, provides for a tailored electrical resistance when viewed along its longitudinal cross-section.

For example, each end region of the sheet in a longitudinal direction can have a lower electrical resistance than the centre of the sheet. This particular distribution of the electrical resistance of the sheet in the longitudinal direction minimises or avoids a negative effect usually occurring with conventional wire mesh heating elements. Specifically, the end regions of the sheet in longitudinal direction extent out of the welding zone (for contacting respective parts of an electrical circuit) and are at a boundary with air. The portion of the sheet (the end regions) not covered by the to be welded thermoplastic components will heat due to the electric current flowing therethrough as the rest of the sheet. Since air is a poor heat conductor, the end regions of the sheet and also the end regions of the thermoplastic components, when viewed in the longitudinal direction, will become hotter compared to a situation where a heating element does not extend from the thermoplastic components (although this is only theoretical). Thus, when using conventional wire mesh heating elements, the end regions in longitudinal direction will become hotter or even overheat, referred to as the "longitudinal edge effect" or "longitudinal end effect", so that welding quality decreases.

The heating element of the present disclosure avoids the longitudinal edge effect by generating less heat per unit area of the sheet due to the specific ratio of cut-outs to electrically conductive sheet. The region of the sheet not being covered by the to be welded thermoplastic components may even have a ratio of cut-outs to electrically conductive sheet of zero, i.e. no cut-outs are made in this region of the sheet. For example, the first cut-outs, when viewed in a longitudinal direction, may be provided in a region of the sheet which will be covered by the to be welded thermoplastic components.

In an implementation variant, a first type of cut-outs can be provided in the centre of the sheet, and a second type of cut-outs can be provided along each of longitudinally extending edges (lateral edges) of the sheet and/or wherein a third type of cut-outs is provided along each of transversely extending regions (longitudinal end regions) of the sheet. In other words, the sheet may have at least two types of cut-outs, such as one in the centre of the sheet and another one along the lateral edges. Alternatively, the sheet may have at least two types of cut-outs, such as one in the centre of the sheet and another one at the longitudinal end regions. Also alternatively, the sheet may have three types of cut-outs, one in the centre of the sheet, another one along the lateral edges, and another one at the longitudinal end regions. The second and third type may be the same or may be a different type. In any case, the second and third type each is different from the first type.

It is to be understood that the sheet may have more than three types of cut-outs, i.e. includes more than three regions of different electrical resistance. The sheet, particularly its electrical resistance, may be tailored based on the dimensions, shape and form of the thermoplastic components to be welded to one another, so that an equal heat distribution and/or a uniform melting speed over the entire weld interface can be achieved. The tailoring of the sheet (electrical resistance distribution) can be accomplished using a finite element method (FEM) simulation and/or calculation, for example, taking into account the form and/or the dimension/s of the to be welded components and/or of the welding zone.

A type of the cut-outs can define a shape, an area, a longitudinal dimension, and/or a transverse dimension of the cut-out. Thus, a cut-out may have the form of a triangle, square, rectangle, polygon, circle, ellipse or even a free form. The form or shape of the cut-out defines the remaining sheet in any cross-sectional direction, which sets the resistance of this particular portion of the sheet. Thus, by changing the type of the cut-out along the transverse direction and/or the longitudinal direction the electrical resistance of the sheet changes, too.

In a further implementation variant, a distance between two adjacent cut-outs in the transverse direction is the same over the entire width of the sheet, changes gradually from the centre of the sheet towards each of longitudinally extending edges of the sheet, or changes stepwise from the centre of the sheet towards each of the longitudinally extending edges of the sheet. The electrical resistance of the sheet in a particular region does not only depend on the size and/or type of the cut-out, but also on the size of the sheet remaining between two adjacent cut-outs. In order to tailor the electrical resistance of the sheet for any given region, the distance between two adjacent cut-outs, i.e. the sheet material remaining between the cut-outs, can be sized and formed as required for a uniform heat distribution over the weld interface.

Alternatively or additionally, a distance between two adjacent cut-outs in the longitudinal direction is the same over the entire length of the sheet, changes gradually from the centre of the sheet towards each of transversely extending longitudinal end regions of the sheet, or changes stepwise from the centre of the sheet towards each of the transversely extending longitudinal end regions of the sheet. Like the distance between two adjacent cut-outs in the transverse direction, the electrical resistance of the sheet can also be set by the distance between two adjacent cut-outs in the longitudinal direction, i.e. the sheet material remaining between the cut-outs.

In yet a further implementation variant, the sheet can be made from an electrically conductive foil. Such foil may consist of a thin metal, plastic having electrically conductive particles or a combination thereof. An exemplary foil can be a stainless steel foil.

The foil may have a thickness between 20 µm and 200 µm, preferably between 30 µm and 100 µm, and more preferably between 50 µm and 100 µm.

Alternatively or additionally, the sheet can be made from a paper comprising carbon fibres and/or carbon nanotubes. Since carbon is electrically conductive, carbon fibres and/or carbon nanotubes can be used in a thin paper sheet or foil to provide electrical conductivity to the sheet, so that it can be used as a heating element. The to be welded thermoplastic components often comprise carbon fibres, so that a sheet also containing carbon will have good integration capabilities. Thus, a good welding quality can be achieved. Due to the thin fibres or nanotubes, the sheet may have a thickness of only between 10 µm and 50 µm, or between 20 µm and 40 µm.

In any case, the sheet of the heating element is provided with iso-thickness, i.e. has substantially the same thickness in its transverse direction as well as its longitudinal direction. This has the advantage, that the influence of the heating element to the welding zone of the to be welded thermoplastic components is not only reduced to a minimum, but is also the same over the entire area of the welding zone.

Conventional wire meshes have the drawback that they often pierce into one or both of the to be welded thermoplastic components, particularly at the crossing/intersecting of the wires. This, however, may lead to an electrical contact to any fibre in the thermoplastic component. If such fibre is electrically conductive, such as carbon fibre, the electric current applied to the heating element will leak into the thermoplastic component, so that the heating of the heating element is non-uniform or even disrupted, and the welding quality significantly decreases.

According to a second exemplary aspect to better understand the present disclosure, a welding kit comprises a heating element, according to the first exemplary aspect or at least one of its implementation variants, and at least one electrical insulation layer. Such electrical insulation layer can be arranged on a surface of the heating element. Welding join partners (particularly carbon fibre reinforced thermoplastics) using a heating element for resistance welding may lead to a current leakage into the join partners. The insulation layer between the metal heating element and the join partners delimits or avoids this effect, so that welding quality can be increased.

In an implementation variant, the at least one electrical insulation layer can comprise a layer of glass plies, i.e. a thin glass fibre ply. During welding, the glass ply (the glass fibres) cover the electrically conductive sheet of the heating element and may be integrated into the thermoplastic material of the respective joint partner, particularly when the thermoplastic material melts during the welding process.

Conventional mesh heating elements may even pierce through an insulation layer and contact the join partners. The heating element of the present disclosure having only a sheet of iso-thickness together with an insulation layer avoids or at least reduces such current leakage into the thermoplastic components by removing the risk of a piercing.

In another implementation variant, the insulation layer can be a thermoplastic material and/or resin, which is used to cover the sheet of the heating element. This provides for increased electrical insulation and better welding quality as the "extra" material facilitates melting of the welding interface. Such material layer can be applied on one side of the sheet or both sides of the sheet.

Alternatively or additionally, the insulation layer can comprise a layer of pre-impregnated glass plies. The glass plies can be pre-impregnated this thermoplastic material and/or resin.

In yet another implementation variant, the at least one electrical insulation layer can be applied at all sides of the sheet contacting a join partner.

In a further implementation variant, other types of insulation can be used, such as a ceramic coating. Particularly, the sheet of the heating element can be covered with ceramic coating on at least one of its surfaces, in order to shield the sheet on the respective side.

In yet a further implementation variant, the insulation layer can be applied to the sheet or weld zone, i.e. between the heating element and the conductive join partners by:
- placing the heating element together with one insulation layer between one of the join partners and prior to welding, or
- placing the heating element together with a respective insulation layer on each side of the sheet of the heating element between both join partners and prior to welding, or
- connecting the heating element already including the at least one insulation layer to one of the join partners by consolidating or otherwise fixing them together prior to the welding (consolidating may be achieved by warming or melting the thermoplastic material of the join partner and applying pressure to the heating element, insulation layer and join partner), or
- placing or connecting the at least one insulation layer on/to the welding zone of one of the join partners, or
- placing or connecting at least one insulation layer on/to the welding zone of each of the join partners.

According to a third exemplary aspect to better understand the present disclosure, a method of manufacturing a heating element according to the first aspect comprises providing a continuous electrically conductive sheet, and cutting a plurality of cut-outs into the sheet along a transverse direction and along a longitudinal direction. Since cutting a sheet, such as a foil or thin paper, can be achieved in a quick and easy manner, such heating element can be manufactured cost-effective and fast. It further allows to manufacture a heating element shortly before it is employed for welding the thermoplastic components, in order to adapt the sheet of the heating element, particularly its electrical resistance, to the circumstances of the welding site and the to be welded components.

In an implementation variant, the cutting can comprise laser cutting the plurality of cut-outs. The laser cutting is applicable to a plurality of sheet materials and further provides for a short cutting time. In addition, each cut-out may be formed differently and in any desired shape, solely depending on the programmed path for the laser.

Alternatively or additionally, the cutting can comprise rolling a roller comprising a plurality of blades over the sheet, wherein the blades are arranged and configured to cut the plurality of cut-outs. In other words, one or more of the blades are arranged in the form of a cut-out, while a plurality of blades may be arranged next to one another along an axial direction of the roller. When rolling the roller over the sheet or pulling the sheet over the roller, the blades will cut through the sheet leaving the sheet with cut-outs and having a predefined electrical resistance. Such roller technique provides for a fast manufacturing of a heating element with the same types of cut-outs along the longitudinal direction of the sheet. It is also applicable to the manufacturing of endless heating elements.

Alternatively or additionally, the cutting can comprise stamping through the sheet with a predefined stamp head which is designed to generate the required cut-out patterns. This may include stamping with a stamp head multiple times until all cut-outs are made, or having a stamp including a plurality of stamp heads and stamping once or only a few times to make all cut-outs in the heating element.

In another implementation variant, the method can further comprise applying a tensile stress to the sheet, i.e. pulling the sheet, to extend a length of the sheet and reducing a width of the sheet. In other words, the sheet is subject to a tensile stress to such an extent that the sides of the sheet contract. This increases the density of the electrically conductive part of the sheet where it contracts, i.e. the ratio of cut-out to sheet decreases and leads to a higher heat generation.

According to another aspect to better understand the present disclosure, such manufacturing method including pulling the electrically conductive member can even be achieved when using a metal wire mesh, such as a stainless steel heating element mesh. By pulling on the metal mesh, the sides of the metal mesh will contract and the wire density becomes higher. This results in a higher energy output or temperature in the contracted regions. This manufacturing method is very fast and cost-effective.

According to a fourth exemplary aspect to better understand the present disclosure, a method of welding thermoplastic components to one another comprises providing a heating element according to the first aspect, and placing a first thermoplastic component at a first side of the heating element and a second thermoplastic component at a second side of the heating element. In other words, the heating element is sandwiched between the first and second thermoplastic components.

The method can further comprise connecting the heating element at its opposite longitudinal ends to an electric circuit, and applying an electric potential to the heating element by the electric circuit. Thus, the electric current flowing through the heating element will produce heat in dependence of the electrical resistance of the sheet of the heating element. This allows heating the first and second thermoplastic component with a uniform heat distribution over the entire welding interface or welding zone, i.e. the overlapping surfaces of the first and second thermoplastic components contacting one another and sandwiching the heating element.

In order to achieve a high-quality welding, the method can further comprise pressing the first and second thermoplastic components together by corresponding upper and lower press elements. Due to the pressure, the heated and, hence, melted thermoplastic components will be pressed through the cut-outs of the sheet of the heating element, so that the thermoplastic material (thermoplastic polymer molecules) can interlink with one another. Once cooled down the first and second thermoplastic components are welded together. Due to the plurality of cut-outs, the sheet of the heating element will be fully integrated into the welded thermoplastic components (besides the longitudinal end regions extending from the thermoplastic components for electrical contacting with the electric circuit).

In an implementation variant, the placing of the first and second thermoplastic components can comprise arranging a region of the heating element having a higher electrical resistance between the first and second thermoplastic components and arranging regions of the heating element having a lower electrical resistance outside of the first and second thermoplastic components. In other words, in the longitudinal direction a longitudinal end region of the sheet of the heating element will be exposed to air outside of the thermoplastic components. This longitudinal end region has a lower electrical resistance, so that less heat is produced by the heating element. This reduces or even avoids the longitudinal edge effect, since the longitudinal edge regions of the first and second thermoplastic components will not be overheated.

Alternatively or additionally, a longitudinal end region of the sheet of the heating element covered by the longitudinal edge region of the first and second thermoplastic components can be provided with a plurality of cut-outs leading to an electrical resistance of the sheet per unit area that is smaller than at a centre of the sheet of the heating element. This also leads to a reduced heat generation in the longitudinal end region of the heating element as well as the longitudinal edge region of the thermoplastic components, so that overheating of these regions can be omitted. The cut-outs facilitate the welding of the first and second thermoplastic component, since the thermoplastic material thereof can contact one another, merge and interlink.

In another implementation variant, the providing of the heating element comprises providing a heating element having the plurality of cut-outs in an area having the same dimensions as a welding zone of each of the first and second thermoplastic components. In other words, the sheet of the heating element is provided with the plurality of cut-outs only in an area that is covered by the first and second thermoplastic components. The remaining areas of the sheet have no cut-outs, so that the respective electrical resistance and the heat generation is lower outside of the welding zone.

In a further implementation variant, the method can further comprise placing at least one electrical insulation layer on a surface of the heating element between the heating element and the first or second thermoplastic component. This reduces electric current leakage into the first and/or second thermoplastic component, which leads to a more uniform heat distribution in the welding zone. Thus, welding quality can be increased. At least one insulation layer can be integrated into the welded components during the welding process.

Alternatively or additionally, providing the heating element can comprise providing a heating element, to which is attached at least one electrical insulation layer. Thus, the at least one electrical insulation layer may already be connected to the heating element, particularly on one side of the heating element before welding the two join partners. This facilitates proper electrical insulation of the heating element.

Further alternatively or additionally, placing the first and second thermoplastic components can comprise providing a first and/or second thermoplastic component, to which is attached at least one electrical insulation layer. Thus, the electrical insulation is achieved before welding at the respective thermoplastic component. This allows facilitating the preparation of the thermoplastic components independent of the manufacturing and provision of the heating element. For instance, an electrical insulation layer may only be connected/attached to the thermoplastic component, if such thermoplastic component is subject to electrical current leakage. As an example only, if the thermoplastic component contains carbon fibre, which is electrically conductive, an electrical insulation layer may be placed and/or connected to the thermoplastic component, while thermoplastic component containing glass fibres may not be supplemented with an electrical insulation layer.

In a further implementation variant, the method can further comprise applying a resin layer or thermoplastic material layer between the heating element and the first thermoplastic component and/or the second thermoplastic component. The resin or thermoplastic material can be electrically insulating, so that any current leakage into the first and/or second thermoplastic component can be avoided.

In yet another implementation variant, the method can further comprise cutting portions of the heating element protruding from the welded first and second thermoplastic components. Specifically, once the first and second thermoplastic components are welded to one another, the electric circuit can be disconnected, and the protruding parts of the heating element can be removed.

Furthermore, the method can exemplarily further comprise sealing a weld seam at the longitudinal end of the first and second thermoplastic components, in order to cover any part of the cut heating element. This facilitates enclosure of the heating element inside of the welded thermoplastic components and avoids any delamination of the welding zone due to the heating element being exposed to the exterior of the welded components.

In yet a further implementation variant the first and second thermoplastic components can be structural parts of the primary structure of an aircraft. The primary structure of the aircraft can be a part of the fuselage, such as a frame, a stringer, and/or the outer skin. Furthermore, the primary structure of the aircraft can also be a part of a wing or tailplane.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates cross sections and a plan view of an exemplary welding zone including a heating element;
- Figure 2: schematically illustrates a plan view of an exemplary heating element;
- Figure 3: schematically illustrates a plan view of another exemplary heating element;
- Figure 4: illustrates exemplary flow diagrams of methods for manufacturing a heating element and of welding thermoplastic components; and
- Figure 5: schematically illustrates a vehicle having a welding zone including a heating element.

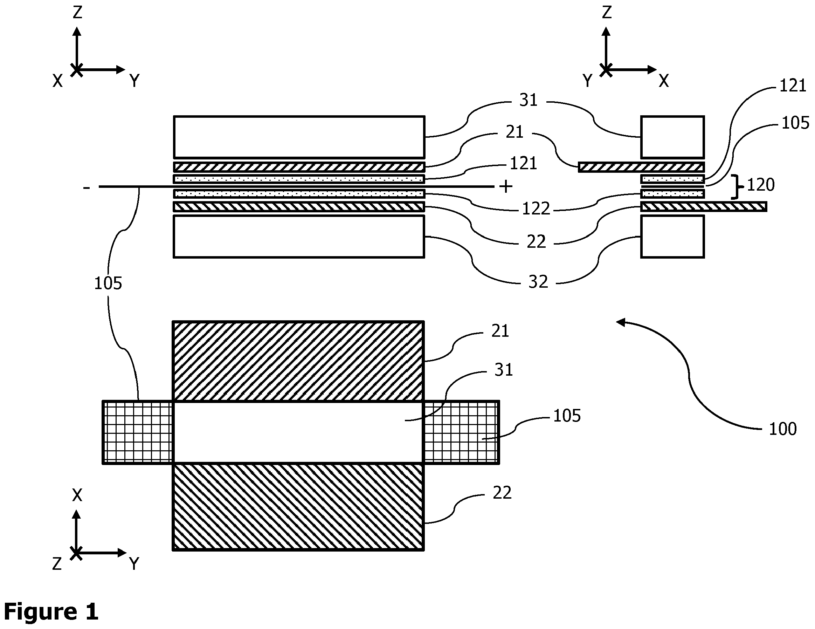

Figure 1 schematically illustrates cross sections and a plan view of an exemplary welding zone including a heating element 100 for resistance welding. Specifically, the heating element 100 comprises an electrically conductive sheet 105 that can be arranged between a first thermoplastic component 21 and a second thermoplastic component 22 that are to be welded to one another. The electrically conductive sheet 105 can be connected to an electric circuit, particularly an electrical potential illustrated as "+" and "-" in Figure 1. Due to the electrical resistance of the sheet 105, heat will be generated when an electric current flows through the sheet 105. This heat can be used to melt at least the surfaces of the first and second thermoplastic components 21, 22, so that they can be welded to one another.

In order to facilitate the welding of the first and second thermoplastic components 21, 22, an upper press element 31 and a lower press element 32 can be provided. The upper and lower press elements 31, 32 can be configured to be moved towards one another, thereby clamping and pressing the first and second thermoplastic components 21, 22 towards one another. This allows pressing the melted surfaces of the first and second thermoplastic components 21, 22, so that they come into contact and are merged into one another. The sheet 105 of the heating element 100 will thereby be integrated into the melted thermoplastic material of the components 21, 22.

In addition, an optional electrically insulating layer 121, 122 can be placed between the sheet 105 and the corresponding first or second thermoplastic component 21, 22. Such electrical insulating layer 121, 122 can be placed on one side of the sheet 105, for example, if this side of the heating element 100 faces thermoplastic components 21, 22 subject to electrical current leakage, such as thermoplastic component 21, 22 including carbon fibres.

Moreover, the heating element 100 may be provided together with at least one electrical insulating layer 121, 122, which together form a welding kit 120. For instance, the at least one electrical insulating layer 121, 122 can be connected or attached to the sheet 105. For instance, such attaching or connecting to the sheet may be achieved by consolidating, welding or adhering the electrical insulating layer 121, 122 to the sheet 105.

As can be derived from the cross sections illustrated in Figure 1, the electrically conductive sheet 105 extends in a longitudinal direction (Y-axis) to such an extent that it protrudes on each side from the first and second thermoplastic components 21, 22. In a transverse direction (perpendicular to the longitudinal direction; X-axis) the sheet 105 has the same size (dimension) as the overlapping area of the first and second thermoplastic components 21, 22, i.e. the welding zone or the area of the first and second thermoplastic components 21, 22 to be welded to one another.

The distances of the elements illustrated in Figure 1 with respect to one another, particularly in a thickness direction (Z-axis) are drawn for clarity of the Figure. They shall not be understood as a required distance. Moreover, the size and thickness of the elements is not to be understood as drawn in scale, but only for illustrating purposes.

In the transverse cross-section (upper right drawing in Figure 1) the longitudinally extending edges of the sheet 105 (left and right edges in the drawing) are disposed close to the air and next to the first and second thermoplastic components 21, 22. Thus, this region of the welding zone may be cooled by the surrounding air. This effect is referred to as the transversal edge effect.

In the longitudinal cross-section (upper left drawing in Figure 1) the longitudinal end regions of the sheet 105 will protrude from the welding zone. In this area heat is also produced by the longitudinal end regions of the sheet 105 exposed to the outside, so that the sheet 105 as well as the first and second thermoplastic components 21, 22 next to this end region may receive additional heat. This effect is referred to as the longitudinal edge effect.

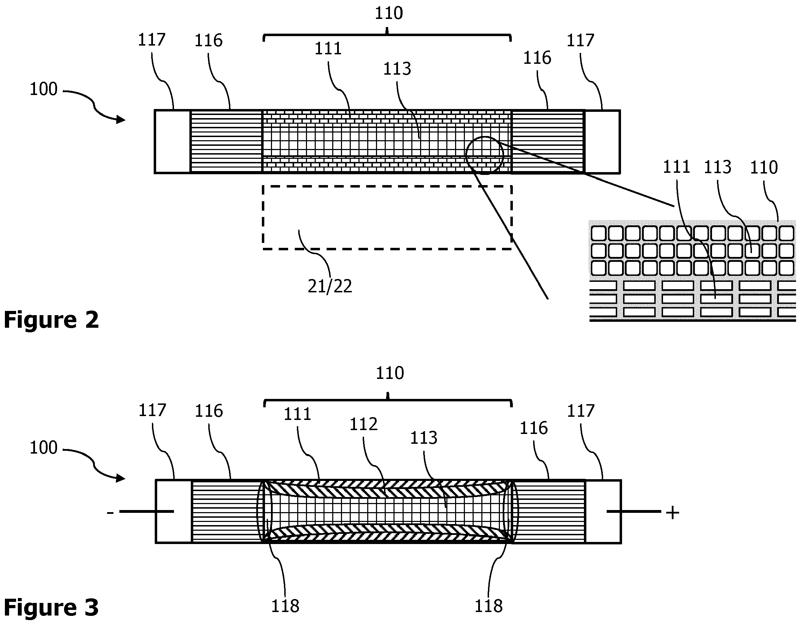

In order to reduce or avoid the transversal edge effect as well as the longitudinal edge effect and further in order to facilitate integration of the sheet 105 into the welded components 21, 22, a plurality of cut-outs is provided in the sheet 105, which will be explained with respect to Figures 2 and 3.

Figures 2 and 3 each schematically illustrate a plan view of an exemplary heating element 100. The sheet 105 of the heating element 100 of each example can be divided into two regions along the longitudinal direction. A first (centre) region 110 can be dimensioned (sized) to correspond to the area of the welding zone, i.e. the welding area defined by the overlap area of first and second thermoplastic components 21, 22. This is schematically indicated by the dashed box in Figure 2 illustrated next to heating element 100. The second region(s) are the longitudinal (exposed) ends 116 of the sheet 105 adjacent to the first region 110.

The first region 110 is provided with a plurality of cut-outs 111-113, where the sheet 105 is pierced through, i.e. the material of the sheet 105 has been removed and a plurality of through holes through the sheet 105 is present. Due to the cut-outs 111-113 in the sheet 105 the electrical conductivity of the sheet 105 is changed, particularly the electrical resistance of the first region 110 is higher than the electrical resistance of the longitudinal ends 116. Heat generated by the sheet 105, once electric current flows through the sheet 105, is higher in the first region 110 then in the longitudinal ends 116, since longitudinal ends 116 and first region 110 are electrically connected in series. This reduces or avoids the longitudinal edge effect and avoids overheating of the welding zone, particularly at the longitudinal ends of the welding zone.

A similar improvement can be achieved along the longitudinally extending edges (the lateral edges) of the sheet 105 (cf. upper and lower edges of the sheet 105 in Figures 2 and 3). Specifically, a plurality of cut-outs 111 can be provided along the longitudinally extending edges of the first region 110 that is of a different type than the cut-outs 113 in the centre of the first region 110. The cut-outs 111, 113 define regions of the first region 110 that are electrically connected in parallel. That means that current intensity flowing through these regions will depend on the resistance of the respective region. In order to generate more heat per unit area, the resistance of the corresponding region has to be reduced. The cut-outs 111, 113 as provided in the example of Figure 2 define a ratio of cut-outs 111-113 to electrically conductive sheet 105 that changes along a transverse direction of the sheet 105, so that an electrical resistance of the sheet 105 has a maximum at the centre of the sheet 105. Due to the smaller electrical resistance along the longitudinally extending edges achieved by the cut-outs 111, the welding zone will be heated more along the longitudinally extending edges. It is to be noted that the cut-outs 111 are provided on both lateral sides of the sheet 105, i.e. of the welding zone. Thus, both regions having cut-outs 111 are generating more heat than the region having cut-outs 113 and the transversal edge effect is reduced or avoided.

Figure 2 further illustrates an example of cut-outs 111 along one of the longitudinally extending edges as well as the cut-outs 113 in the centre of the first region 110. As can be derived from this exemplary illustration, the type of the cut-outs 111, 113 changes from longitudinally extending rectangles to squares. Any other shape or form of the cut-outs 111, 113 may be employed to achieve similar effects, so that the electrical resistance of the sheet 105 can be tailored in any region as desired.

From the detailed exemplary illustration of the cut-outs 111, 113 it can further be derived that a distance between two adjacent cut-outs 111, 113 may be the same or may change in the transverse direction and/or in the longitudinal direction of the sheet 105. This distance coincides with a width and length of the electrically conductive sheet 105 in a predefined area. This influences the electrical resistance and, hence, the current intensity flowing through this predefined area of the sheet 105. Thus, heat generated by the sheet 105 in a particular region or area can also be tailored by setting the distance between two adjacent cut-outs 111, 113.

Furthermore, with respect to Figure 3, more than one region may be provided that each have a different type of cut-out 111-113. For instance, along each of the longitudinally extending edges of the sheet 105, there is an area of a first type of cut-outs 111. Further to the centre and still a long each of the longitudinally extending edges of the sheet 105, there is another area of a second type of cut-outs 112, while the centre is provided with a third type of cut-outs 113.

In order to address the transversal edge effect as well as the longitudinal edge effect, the regions of different types of cut-outs 111-113 may change their form at the longitudinal ends of the first region 110. As is illustrated in Figure 3, the extent of the area of the first type of cut-outs 111 and the second type of cut-outs 112 in the transverse direction decreases towards the longitudinal end regions 118 of the first region 110. Thus, the additional heat provided by the sheet 105 in the regions of the first and second type cut-outs 111, 112 is reduced towards the longitudinal end regions 118. The longitudinal end regions 118 form the transition of the first region 110 to the longitudinal ends 116.

It is to be understood that the longitudinal end regions 118 may be provided with another type of cut-out (not specifically illustrated) or may have no cut-out at all as the longitudinal ends 116 of the sheet 105. In addition, it is to be understood that the sheet 105 may be divided into more than three regions of different types of cut-outs 111-113. Specifically, the cut-outs 111-113 and/or the distance between two adjacent cut-outs 111-113 can gradually change in the transverse direction and/or in the longitudinal direction.

Each of the longitudinal ends 116 may be connected to an electric circuit via a respective clamp 117 or a similar measure, such as a solder spot or seam or the like.

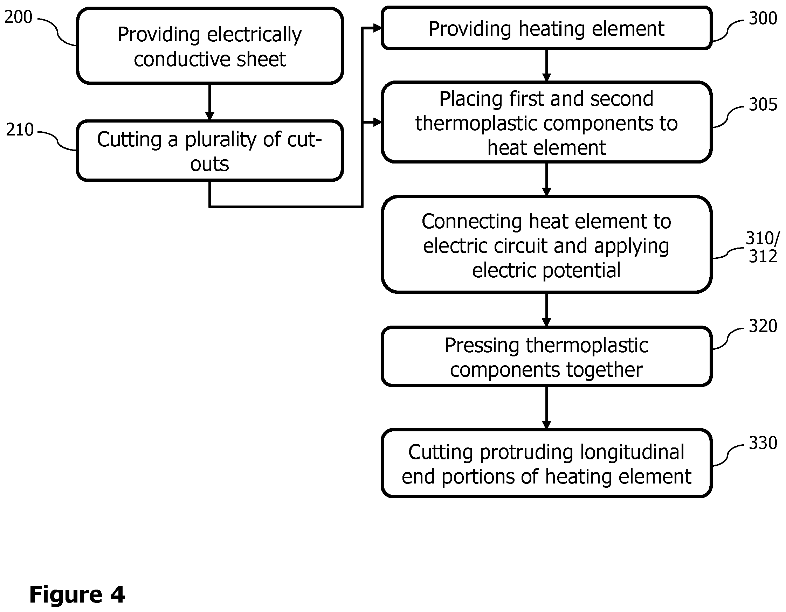

Figure 4 illustrates exemplary flow diagrams of methods for manufacturing a heating element 100 and of welding thermoplastic components 21, 22. The heating element 100 and thermoplastic components 21, 22 can be those illustrated in and described with respect to Figures 1 to 3.

Manufacturing a heating element 100 starts in step 200 with providing a continuous electrically conductive sheet 105. This sheet 105 may be provided in the form of a roll of foil and/or paper including or consisting of an electrically conductive material. Furthermore, in step 210, a plurality of cut-outs 111-113 are cut into the sheet 105 along a transverse direction as well as along longitudinal direction of the sheet 105. Optionally, the sheet 105 may be cut into longitudinal pieces, if the provided sheet 105 is longer than one heating element 100.

The design and/or layout of the cut-outs can be determined in preparation of such heating element manufacturing method. It can include finding suitable parameters for the cut-outs for the welding situation, e.g. depending on the size and shape of the join partners and/or weld zone. This determination can include, but is not limited to, a thermal-transient FEM simulation. The FEM simulation can be programmed to establish a sheet and cut-out layout and the described ration to achieve a uniform temperature distribution with respect to the circumstances given by the join partners and weld zone.

Furthermore, such heating element 100 may be provided in a step 300 of a method of welding thermoplastic components 21, 22. Alternatively, after method step 210, a first and second thermoplastic component 21, 22 may be placed at a first and second side of the heating element 100, respectively, in step 305. This placing step 305 can include arranging a first region 110 of the heating element 100 between the first and second thermoplastic components 21, 22, while longitudinal end portions 116 of the heating element 110 are arranged outside of the first and second thermoplastic components. The longitudinal end portions 116 can have a lower electrical resistance than the first region 110 of the sheet 105.

In a further method step 310, the heating element can be connected to an electric circuit. For instance, each of its opposite longitudinal ends 116 can be connected to an electric circuit at an electrical contacting point 117, such as a clamp. Thereafter, in step 312, an electric potential is applied to the heating element 100 by the electric circuit. Due to the electrical conductivity of the sheet 105, electric current flows through the heating element 100. The heating element 100 generates heat depending on its electrical resistance in the corresponding regions of the different types of cut-outs 111-113.

This heat melts the thermoplastic material of this thermoplastic components 21, 22 at least at their interfacing surfaces, so that the components 21, 22 are welded together. The welding can be facilitated by pressing, in step 320, the thermoplastic components 21, 22 together. For instance, upper and lower press elements 31, 32 can be employed for the pressing of the thermoplastic components 21, 22.

Once welded the protruding longitudinal end portions 116 of the heating element 100 can be cut along the weld seam of the first and second thermoplastic components 21, 22, in step 330. These longitudinal end portions 116 are not required after successful welding. Optionally, the remainder of the cut longitudinal end portions 116, if any, may be sealed, in order to avoid exposure to the exterior.

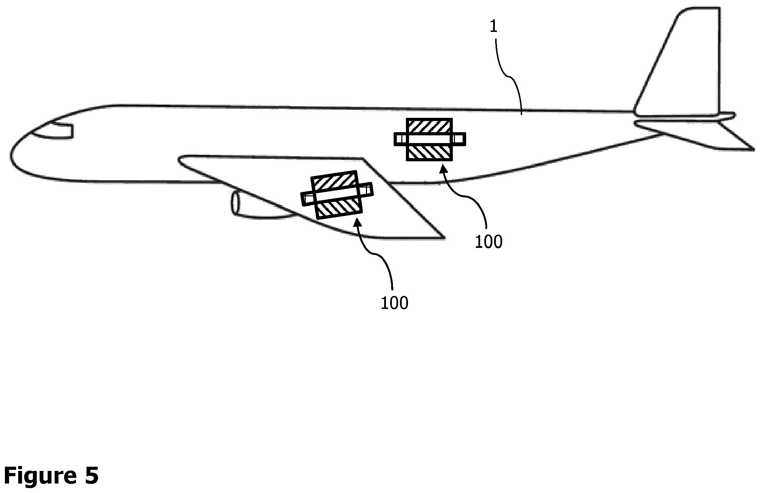

Figure 5 schematically illustrates a vehicle 1 having a welding zone including a heating element 100. For instance, an aircraft 1 may comprise a plurality of structural components, such as components of a primary structure that have to be welded to one another during assembly of the aircraft 1. An exemplary primary structure component can be an outer skin, a frame, a stringer, a bar, a rib or the like that forms part of a fuselage, a wing, a tailplane or other large component of the aircraft 1. Two of these primary structure components or any other components of the aircraft can be welded to one another using a heating element 100 as described with respect to Figures 1 to 4.

The above description of the drawings is to be understood as providing only exemplary embodiments of the present invention and shall not limit the invention to these particular embodiments.

## Claims

1. A heating element (100) for resistance welding of thermoplastic components (21, 22), the heating element (100) comprising:
an electrically conductive sheet (105) comprising a plurality of cut-outs (111-113),
wherein a ratio of cut-outs (111-113) to electrically conductive sheet (105) changes at least along a transverse direction of the sheet (105), so that an electrical resistance of the sheet (105) has a maximum at a centre of the sheet (105).

2. The heating element (100) according to claim 1, wherein a ratio of cut-outs (111-113) to electrically conductive sheet (105) changes along a longitudinal direction of the sheet (105),
wherein, preferably, each end region (116) of the sheet (105) has a lower electrical resistance than the centre of the sheet (105).

3. The heating element (100) according to claim 1 or 2, wherein a first type of cut-outs (113) is provided in the centre of the sheet (105), and a second type of cut-outs (111, 112) is provided along each of longitudinally extending edges of the sheet (105) and/or wherein a third type of cut-outs is provided along each of transversely extending longitudinal end regions (118) of the sheet (105),
wherein a type of the cut-outs (111-113) defines a shape, an area, a longitudinal dimension, and/or a transverse dimension of the cut-out (111-113).

4. The heating element (100) according to one of claims 1 to 3, wherein a distance between two adjacent cut-outs (111-113) in the transverse direction is the same over the entire width of the sheet (105), changes gradually from the centre of the sheet (105) towards each of longitudinally extending edges of the sheet (105), or changes stepwise from the centre of the sheet (105) towards each of the longitudinally extending edges of the sheet (105), and/or
wherein a distance between two adjacent cut-outs (111-113) in the longitudinal direction is the same over the entire length of the sheet (105), changes gradually from the centre of the sheet (105) towards each of transversely extending longitudinal end regions (118) of the sheet (105), or changes stepwise from the centre of the sheet (105) towards each of the longitudinal end regions (118) of the sheet (105).

5. The heating element (100) according to one of claims 1 to 4, wherein the sheet (105) is made from an electrically conductive foil and/or a paper comprising carbon fibres and/or nanotubes.

6. A welding kit (120), comprising:
a heating element (100) according to one of claims 1 to 5; and
at least one electrical insulation layer (121, 122) arranged on a surface of the heating element (100),
wherein, preferably, the at least one electrical insulation layer (121, 122) comprises a layer of glass plies and/or a thermoplastic material and/or is a ceramic coating applied onto the electrically conductive sheet (105).

7. A method of manufacturing a heating element (100) according to one of claims 1 to 5, the method comprising:
providing (200) a continuous electrically conductive sheet (105); and
cutting (210) a plurality of cut-outs (111-113) into the sheet (105) along a transverse direction and along a longitudinal direction.

8. The method according to claim 7, wherein cutting (210) comprises:
laser cutting the plurality of cut-outs (111-113); or
rolling a roller comprising a plurality of blades over the sheet (105), wherein the blades are arranged and configured to cut the plurality of cut-outs (111-113).

9. The method according to claim 7 or 8, further comprising:
applying a tensile stress to the sheet (105) to extend a length of the sheet (105) and reducing a width of the sheet (105).

10. A method of welding thermoplastic components (21, 22) to one another, the method comprising:
providing (300) a heating element (100) according to one of claims 1 to 5;
placing (305) a first thermoplastic component (21) at a first side of the heating element (100) and a second thermoplastic component (22) at a second side of the heating element (100);
connecting (310) the heating element (100) at its opposite longitudinal ends to an electric circuit;
applying (312) an electric potential to the heating element (100) by the electric circuit; and
pressing (320) the first and second thermoplastic components (21, 22) together by corresponding upper and lower press elements (31, 32).

11. The method according to claim 10, wherein placing (305) the first and second thermoplastic components (21, 22) comprises arranging a region (110) of the heating element (100) having a higher electrical resistance between the first and second thermoplastic components (21, 22) and arranging longitudinal end portions (116) of the heating element (100) having a lower electrical resistance outside of the first and second thermoplastic components (21, 22).

12. The method according to claim 10 or 11, wherein providing (300) the heating element (100) comprises providing a heating element (100) having the plurality of cut-outs (111-113) in a region (110) having the same dimensions as a welding area of each of the first and second thermoplastic components (21, 22).

13. The method according to one of claims 10 to 12, further comprising:
placing at least one electrical insulation layer (121, 122) on a surface of the heating element (100) between the heating element (100) and the first or second thermoplastic component (21, 22), and/or
wherein providing (300) the heating element (100) comprises providing a heating element (100), to which is attached at least one electrical insulation layer (121, 122), and/or
wherein placing (305) the first and second thermoplastic components (21, 22) comprises providing the first and/or second thermoplastic component (21, 22), to which is attached at least one electrical insulation layer (121, 122).

14. The method according to one of claims 10 to 13, further comprising:
cutting (330) longitudinal end portions (116) of the heating element (100) protruding from the welded first and second thermoplastic components (21, 22).

15. The method according to one of claims 10 to 14, wherein the first and second thermoplastic components (21, 22) are structural parts of the primary structure of an aircraft (1).
